(19) Europäisches Patentamt

European Patent Office

Office européen des brevets

(11) **EP 1 180 875 B1**

(12) **EUROPEAN PATENT SPECIFICATION**

(45) Date of publication and mention
of the grant of the patent:
**11.10.2006 Bulletin 2006/41**

(51) Int Cl.:
***H04L 12/56*** *(2006.01)*

(21) Application number: **00402296.8**

(22) Date of filing: **17.08.2000**

(54) **Method for connection acceptance control and optimal multimedia content delivery over networks**

Verfahren zur Verbindungszugangssteuerung und zur optimalen multimedialen Inhaltslieferung über Netze

Procédé de contrôle d'admission de connexion et de distribution optimale de contenu multimédia dans des réseaux

(84) Designated Contracting States:
**DE FR GB**

(43) Date of publication of application:
**20.02.2002 Bulletin 2002/08**

(73) Proprietor: **BURST.COM, INC.**
**Santa Rosa, California 95404 (US)**

(72) Inventor: **Allen, Arthur**
**94040 Mountain View (California) (US)**

(74) Representative: **Lang, Johannes et al**
**SEP Pagenberg & Associés**
**14 boulevard Malesherbes**
**75008 Paris (FR)**

(56) References cited:
- **REININGER D ET AL: "A DYNAMIC QUALITY OF SERVICE FRAMEWORK FOR VIDEO IN BROADBAND NETWORKS" IEEE NETWORK, IEEE INC. NEW YORK,US, vol. 12, no. 6, November 1998 (1998-11), pages 22-34, XP000873125 ISSN: 0890-8044**
- **TOBE Y ET AL: "INTEGRATED QOS MANAGEMENT: COOPERATION OF PROCESSOR CAPACITY RESERVES AND TRAFFIC MANAGEMENT" IEICE TRANSACTIONS ON COMMUNICATIONS,JP, INSTITUTE OF ELECTRONICS INFORMATION AND COMM. ENG. TOKYO, vol. E81-B, no. 11, 1 November 1998 (1998-11-01), pages 1998-2006, XP000790226 ISSN: 0916-8516**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**1. Background of the Invention**

**1.1 Field of the Invention**

This invention relates to the field of delivery of multimedia content over a variety of networks. More specifically, it pertains to multimedia servers which service many clients simultaneously for the delivery of multimedia content which is used and played back at each client. It addresses methods for determining optimal delivery rates to each client and methods for determining whether new clients may be accepted without diminishing the quality of service to existing clients.

**1.2 Background Information**

In the history of multimedia program delivery, some in the industry have long advocated the use of large client-side buffers and faster-than-real-time content delivery over a network as offering the best of all worlds: a jitter-free viewing experience and a cost-effective utilization of the network resources at hand. Few systems, however, go very far in addressing how to schedule clients or a method for accepting new clients. Real-time systems, often known as streaming systems, can schedule new clients in a very simple manner -- if sufficient bandwidth remains for the added real-time stream, then the client may be accepted. However, such systems do not maximize the number of simultaneous clients. On the other hand, faster than real-time delivery, sometimes known as store-and-forward systems, open up the possibility for more flexible scheduling procedures to control and optimize the number of simultaneous clients while ensuring a high level of quality of service.

The methods for such call acceptance and flow modulation that have been proposed in the prior art have been largely ad-hoc and also incomplete. These have been ad-hoc in the sense that there has been no guiding rationale for their selection from among many possible and potentially superior alternatives. The methods have also been incomplete insofar as they did not address the question of whether any given incoming request for service should be accepted or denied. Video-on-demand systems, or more generally, any system in which a multimedia server is designed to serve multiple clients over a network to deliver bounded content, can benefit from the use of such flow modulation techniques and call acceptance procedures.

**1.3 Optimal Content Flow Modulation**

One time-honored way of designing methods of the class required here is to recast the problem to be solved as an optimization problem, in which one seeks to maximize a designated value function moment-by-moment, subject to a set of real-world operational constraints which will typically vary over time. Accordingly, given a set of clients and associated sessions, an optimal delivery procedure continuously establishes content flow rates from the content server to each of its clients so as to maximize aggregate value according to the governing value function.

This approach holds several advantages: 1) optimization problems are well understood, and are tractable by a large and diverse collection of computational methods; 2) if it exists, the global solution that is obtained is arguably optimal by construction, and thus superior or equal to all other.

The present invention teaches the method of optimizing two particular value functions:

1) total data delivered. (maximize throughput)
2) total delivery charges (maximize charges).

The first value function does not distinguish one customer from another and will deliver as much data as possible from server to clients irrespective of the characteristics of the latter. The second value function favors the service of high paying customers. It can easily be seen that the first function is a special case of the second one whereby all clients are charged equally.

As will be seen in this disclosure, optimizing for these functions and identifying the necessary constraints requires a new and unique perspective that is specifically designed for the multimedia environment. Moreover, the disclosed methods are specifically designed to account for and accommodate real-world scenarios of today's networks. Consequently many variations of the method are presented to accommodate various scenarios.

The article "A Dynamic quality of service framework for Video in Broadband Networks" by Reininger, Daniel, that can be found in IEEE Network, IEEE inc. New York, US, vol. 12, number 6, November 1998 (1998-11), pages 22 to 34, XP000873125 ISSN: 0890-8044 describes a dynamic framework for quality of service control of video in distributed multi-media applications. The framework allows flexible and efficient video delivery with application-level quality of service support. Key components of the framework are client quality of service renegotiation, server source rate control, and dynamic bandwidth allocation.

## 2. Summary of the Invention

### 2.1 Call/Connection Acceptance Control (CAC)

A CAC procedure is responsible for deciding whether a candidate for service can be accommodated without jeopardizing sessions already in progress at the present time or at some time in the future; failing that it must decide whether a service request should be queued for a time, or rejected.

### 2.1 Flow modulation

Flow modulation methods are those portions of the system which manage the communication and data flow between the server and the clients. Collectively, these methods provide the multimedia data to the client and provide the server with the information about the state of the transmission, playback, user status and network status. These parameters are further used by the present invention in the CAC procedures. In fact, as will be shown, the proposed CAC procedures are tightly integrated with the flow modulation methods.

### 2.3 Adaptation to Variations in Network Capacity

Operational constraints may change over time. For instance, one might elect to vary the total bandwidth available for multimedia content delivery according to the time of day. Alternatively, exogenous data flows on the network may cause unexpected disturbances by usurping available bandwidth and impeding the delivery of data along established session channels. The content delivery strategy of the present invention includes the ability to adapt to scheduled as well as unexpected disturbances so as to minimize unwanted disruptions of services.

### 2.4 Burst transmissions provide the opportunity to adapt

The present invention, due to it's faster-than-realtime transmissions (also know as burst transmissions), which are realized by use of high-bandwidth networks and large client cache or intermediate storage, provides an opportunity to adapt to changing network conditions. In contrast real-time (streaming) systems are essentially designed for worst-case scenarios: each client must be assumed to constantly use the complete real-time playback bandwidth. Such a system is unable to adapt to any derivation from this scenario. For example, take the simple case where the total server bandwidth is 100% utilized by all clients playing back the streaming video. Should any network condition change, such as a temporary decrease in available bandwidth over the network, then one or more clients' playback is interrupted, and the system can not recover from such a condition until the bandwidth is regained. Even worse if a single client presses pause either that unused bandwidth must remain reserved and no more clients can be accepted, or that paused client is pushed out in order to service the new client. In essence little or no CAC procedure may be implemented.

In contrast the present invention burst transmits portions of a program and immediately 'gets ahead of itself', thus allowing headroom for a myriad of methods to intelligently handle new clients, client interactivity and possible network fluctuations.

Methods are taught for optimally determining the flow rate to each client. Methods are also taught for accepting or rejecting new clients; these call-acceptance methods are tightly coupled with said flow rate modulation methods. A series of constraint expressions are presented which govern the methods for determining the flow rates and acceptance of new clients. Linear programming techniques are used to optimally solve these expressions. Various embodiments are presented including scenarios for multiple-rate tariffs, and time-of-day bandwidth variations.

## 3. Brief Description of the Drawings

Figure 1     depicts the flow of control and/or data between the different stations of a content delivery session.

Figure 2     illustrates the Entity Data Model.

Figure 3     geometrically illustrates the problem statement.

Figure 4     geometrically illustrates an expansion of the problem statement.

Figure 5     illustrates a method for implementing flow modulation.

Figure 6     illustrates a method for implementing flow modulation for maximized charges.

Figure 7     illustrates typical content flow.

Figure 8     illustrates typical server swing capacity.

Figure 9     illustrates a method for call-acceptance and control (CAC).

Figure 10     illustrates planned constraints on maximum flow.

Figure 11     illustrates a method for call-acceptance and control (CAC) with scheduled flow changes

Figure 12     illustartes stratification of services.

Figure 13     illustrates a method for call-acceptance and control (CAC) for maximal charge.

## 4. Detailed Description of the Invention

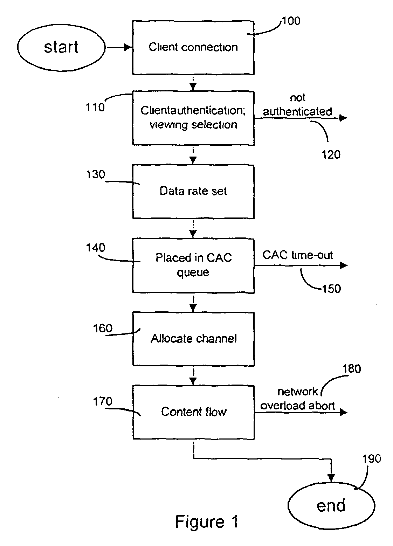

### 4.1 Data & Control Flows (Figure 1)

Figure 1 depicts the flow of control and/or data between the different stations of a content delivery session. As shown a client attempts a connection (100) and manifests itself to the Content Selection subsystem by means of a low bandwidth control channel (not shown). Next the client is authenticated and a selection is made (110), typically with the aid of a browser software such as Netscape or Microsoft Internet Explorer. If the client is not authenticated, it is dismissed from the system (120). If the client has been authenticated and a program selected for viewing then the rate of service is set at this point (130), perhaps according to the selection that was made, or some contractual stipulation. The client is now placed on the service queue of the CAC subsystem (140). A client that is made to wait too long will eventually balk (150). Assuming this does not occur, the CAC subsystem will eventually allocate a channel to the client and open a session (160). Control now devolves upon the Content Flow Modulator (not shown) which starts the flow of content from server to client (170). Subsequent capacity changes, whether predictable or not, may force an abrupt termination of a session in progress (180). Otherwise the session runs to completion (190).

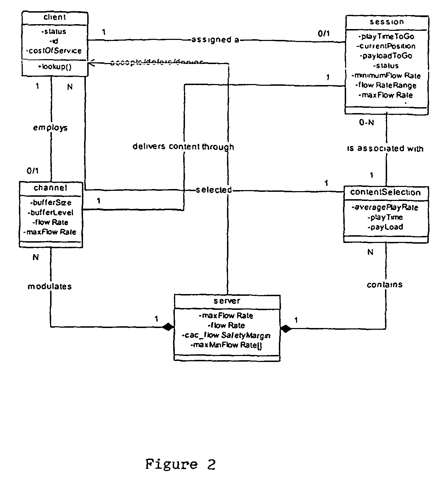

### 4.2 Entity Data Model (Figure 2, listing, table)

The entities entering into our discussion are depicted in figure 2. Client 200 maintains certain data associated with this entity; as shown but not labeled, which includes without limitation, status, id and costOfService. The other entities also each include unlabeled but depicted data. The diagram further depicts the relationship between each entity. As shown, client 200 is assigned a session 240. Client 200 employs a channel 210. Client 200 selects contentSelection 230. Session 240 delivers content through channel 210. Server 220 modulates channel 210. Server 200 contains contentSelection 210. Server 220 accepts, defers or denies client 200. And contentSelection 230 is associated with session 240.

Furthermore the figure depicts the various one-to-many relationships. Each client 200 employs one channel 210. Client 200 may or may not receive one of channel 210, as depicted by the 0/1 notation. Similarly, client 200 may or may not receive a session 240. However, whenever client 200 does receive a session 240, it will always receive a channel 210 since channel 210 and session 240 are allocated as a pair. One or more (N) of client 200 may select one of contentSelection 230. And server 220 contains one or more (N) of contentSelection 230. Each one of contentSelection 230 is associated with 0-N of session 240. Each session 240 delivers content through one of channel 210. And server 220 modulates one or more (N) of channel 210.

A more detailed list of each entity of figure 2, and each one's associated description, data elements and function calls is listed below. This listing closely resembles that of object-oriented programming. As such, 'methods' represent the ability to obtain or modify data, while 'attributes' represent data which is directly associated with that particular entity. The listing also includes information relating to one embodiment wherein software programming specifics are disclosed, such as a variable type (double, int and so forth) and more. The present invention is not limited to such an embodiment and other implementations are possible without deviating from the scope and intent of the present invention. The listing, however detailed, is merely illustrative of the data and functions which are used in the equations and methods described herein.

Consequently, data and functions from this listing, associated with the various entities, will be used in forthcoming equations, flowcharts and methods. The reader is directed to this listing as reference when reading such equations and examining such drawings.

--- start of entity data model detailed listing ---

**Model: Untitled 1 (public)**

*Contains:*

client, session, channel, server, contentSelection.

**Component: client (public Class/Interface)**

*Comment:*

A client entity stands for a client presently requesting or receiving service. *Methods:*

```
public static lookup (id: in int) : client
public GetId () : const int&
public SetId (val : in int&)
public GetCostOfService () : const double&
public SetCostOfService (val : in double&)
```

*Attributes:*

private **status: client<int>**
Specifies whether or not a client has been allocated a channel and session.
private **id: int**
Integer-valued identifier that is unique to the client (primary key). Can be obtained from a monotonically increasing counter.
private **costOfService: double**
Dollar charge per Mbyte. This value is the same for all customers under flow optimization. Under cost/charge optimization may be an integer value reflective of the rank; the higher the rank the higher the charge.

*Has:*

```
public selected: contentSelection
public assigned a: session
public employs: channel
```

**Component: session (public Class/Interface)**

*Comment:*

A session entity holds various state information about the service being received by an associated customer.
```
public GetCurrentPosition () : const double&
public SetCurrentPosition (val : in double&)
public GetPayloadToGo () : const double&
public SetPayloadToGo (val : in double&)
public GetStatus () : const int&
public SetStatus (val : in int&)
public GetMinimumFlowRate () : const double&
public SetMinimumFlowRate (val : in double&)
public GetFlowRateRange () : const double&
public SetFlowRateRange (val : in double&)
```

public **GetMaxFlowRate () : const double&**
public **SetMaxFlowRate (val : in double&)**

*Attributes*:

private **playTimeToGo: double**
Indicates the minutes remaining in the viewing experience. Initialized to
contentSelectiont.playTime (see below).
private **currentPosition: double**
Pointer into media content from which content is being delivered.
private **payloadToGo: double**
The amount of media content (in Mbytes) as yet undelivered by the server.
Does not include any content presently stored in the client-side buffer.
private **status: int**
Indicates whether sesion is active or paused.
private **minimumFlowRate: double**
This is the minimum flow from server to client required to ensure uninterrupted service over the remaining playTime.
Has a value of zero if playloadToGo is zero. Given by (payloadToGo * 8)/(playTimeToGo *60)
private **flowRateRange: double**
Specifies the effective range over which the channel content flow serving a session is constained without consideratiuon
for interactions with other flows. Equals maxFlowRate - minimumFlowRate
private **maxFlowRate: double**
Effective maximum bound on flow as expressed in formula (8) which must be re-evaluated periodically.

*Has:*

public **delivers content through: channel**

**Component: channel (public Class/Interface)**

*Comment:*

A channel represents the network resources from server to client associated with an ongoing session, encompassing the client-side buffer if any, and its level.
public **GetBufferLevel () : const double&**
public **SetBufferLevel (val : in double&)**
public **GetFlowRate () : const double&**
public **SetFlowRate (val : in double&)**
public **GetMaxFlowRate () : const double&**
public **SetMaxFlowRate (val: in double&)**

*Attributes:*

private **bufferSize: double**
Capacity of the client-side buffer (or equivalent)
private **bufferLevel: double**
Current buffer level in MBytes of stored content.
private **flowRate: double**
Flow rate through channel specified by the relevant optimizing flow modulator.
private **maxFlowRate: double**
This value represents the maximum possible flow rate from the server to an invidual client over its "channel". This value
reflects restrictions on flow that pertain to an individual client. It may be determined by factors such as the bandwidth of
client's link to the network, or a limit imposed administratively to ensure balanced network utilization.

**Component: server (public Class/Interface)**

*Comment:*

Entity representing the media server and its CAC and flow modulation activities.
public **GetFlowRate () : const double&**
public **SetFlowRate (val : in double&)**
public **GetMaxMinFlowRate[] () : const double&**
public **SetMaxMinFlowRate[] (val : in double&)**

*Attributes:*

private **maxFlowRate: double**
Maximum possible content flow that is allocated to the server by the network.
private **flowRate: double**
Aggregate content flow rate, summed over all sessions and their associated channels.
private **cac_flowSafetyMargin: double**
Tunable safety margin used by the CAC algorithm to protect sessions-in-progress from being affected by changes in available network bandwidth.
private **maxMinFlowRate[]: double**
Applies when N rate tariffs exist. This array holds the maximum floor level for each category of service. The value for the costiest category N is stored in maxMinFlowRate[N-1], and for the least costliest in maxMinFlowRate[0]. It is the relative magnitude of these ascending values that matters, not their absolute value. Thus the actual maximum floor flow rate for category k is given by server.maxFlowRate * (server.maxMinFlowRate[k-1] /server.maxMinFlowRate[N-1]). Similarly, the maximum floor flow rate for category N is server.maxFlowRate.

*Has:*

> public **contains: contentSelection**
> public **modulates: channel**

**Component: contentSelection (public Class/Interface)**

*Comment:*

Entity represents a video/sound clip or other bounded unit of content. A continuous data feed does not qualify.

*Attributes:*

private **averagePlayRate: double**
The avarage rate at which media content is consumed by the client, as computed by dividing the (payload * 8) by the (playTime * 60)
private **playTime: double**
Duration of play of the media content in minutes.
private **payLoad: double**
total size of the content in Mbytes.

*Has:*

public **is associated with: session**

--- end of entity data model detailed listing ---

The following table summarizes the highlights of the previous detailed description of each entity in Figure 2.

| Entity | Description |
|---|---|
| client 200 | Each client is denoted by an associated unique integer index $_{Id}$. The set of active clients is denoted by $S_{ActiveClients}$. The set of deferred clients is denoted by $S_{QdClients}$. Incoming clients are expected to select the content they wish to view prior to being queued for dispatch by the CAC sub-system, which requires knowledge of the client's bandwidth requirements, duration of play, and cost of service, all of which may vary according to the selection. |
| server 220 | Servers sit astride a network and can deliver media content through the network to their clients up to a designated maximum flow rate. The server is responsible for accepting or rejecting clients, launching sessions and associated channels for the former, and modulates content flows over all channels in an optimal manner. |
| channel 210 | A channel represents the data path between the server and the client. The channel buffer is typically located near or within the clients viewing station. The flow of content through the channel is set by the flow modulator sub-system. |
| contentSelection 230 | A server will typically act as a repository for media content, which it can deliver to clients upon demand. For our purposes media content is characterized by its payload and the play duration, which together imply the **averagePlayRate** = (payload*8)/(playTime *60). The averagePlayRate is none other than the streaming rate imposed by real-time just-in-time streaming algorithms. |
| session 240 | Every session represents an instance of media content delivery to an associated client over a designated channel. The **playTimeToGo** indicates the time remaining before the content is fully played out to the client. The **payloadToGo** is the amount of content data as yet undelivered to the channel. A session terminates when this value reaches zero, at which time **playTimeToGo** may still be large, according to the capacity, the level of the channel buffer, and the media play rate. |

**4.3 Constraints On Content Flow**

Before moving on to more figures, it is imperative to establish some formulas and problem statements which are used in the methods which follow.

The flow of content between entities is subject to the following constraints at all times. Buffer levels are always expressed in Mbytes and data rates in Mbits/sec.

$$(1) \quad \sum_{i \, \varepsilon \, SactiveClients} (client.lookup(i).channel.flowRate) <= server.maxFlowRate$$

*The sum of all channel flows cannot exceed the imposed maximum throughput capacity of the server.*

$$(2) \quad client.lookup(i).channel.flowRate <= client.lookup(i).channel.maxFlowRate$$
$$for \ all \ i \ \varepsilon \ S_{activeClients}$$

*The data path from server to client is subject to its own constriction.*

$$(3) \quad client.lookup(i).channel.flowRate <=$$
$$(client.lookup(i).channel.bufferSize -$$
$$client.lookup(i).channel.bufferLevel) * 8/60 \quad +$$
$$client.lookup(i).session.mediaContent.averagePlayRate,$$
$$for \ all \ i \ \varepsilon \ S_{activeClients},$$

*The channel buffer is never allowed to overflow.*

$$(4) \quad client.lookup(i).channel.flowRate <= client.lookup(i).session.payloadToGo$$
$$* 8/60$$
$$for \ all \ i \ \varepsilon \ S_{activeClients},$$

*Content that does not exist can not be delivered. (Constraint 1 will ordinarily prevail except at the very end of a session.)*

The constraints listed above are straightforward applications of common sense in relation to the flow of data through constricted channels, out of finite data sources, and into and out of bounded buffers. By contrast, the following constraint, which imposes a minimum channel flow rate instead of a maximum, is less obvious. Indeed its introduction here and subsequent use in the CAC procedure constitute the central innovation of the methods presented in this document. The minimum value, termed the *minFlowRate* is set to the flow rate which, if sustained over the balance of the play time to go (*playTimeToGo*), ensures that all required content will be available when needed -- and no sooner -- until all content is played out. This floor value can be calculated for $i \ \varepsilon \ S_{activeClients}$, by the formula

$$(5) \quad client.lookup(i).session \ minFlowRate =$$
$$(client.lookup(i).session.payloadToGo * 8) /$$
$$(client.lookup(i).session.playTimeToGo * 60)$$

Thus:

$$(6) \quad client.lookup(i).channel.flowRate >=$$
$$client.lookup(i).session.minFlowRate$$
$$for \ all \ i \ \varepsilon \ S_{activeClients},$$

The variable constraint bounds (i.e. the values to the right of the inequality symbol) of equations 1 - 4 and 6 are re-evaluated on a periodic basis (e.g. once per second) prior to the execution of the CAC procedure and optimizer. In particular, the *minFlowRate* value starts out at the beginning of a session equal to the streaming rate. By construction the *minFlowRate* rate never exceeds this initial value so long as constraint 6 is honored. In fact, constraint 5 implies that the *minflowRate* value must be a diminishing function of time that may hold its value for a time but never rises. As seen from equation 6, the actual data rate of the channel, *flowRate,* is always greater than or equal to the *minFlowRate.* By design, and virtue of the fact the present invention uses faster-than-realtime transmissions, the system quickly gets ahead of itself and ensures that after initial conditions, the *minFlowRate* is always equal to or less than the real-time rate and that it continues to decrease. As we shall see the CAC procedure exploits this monotonic characteristic of the minimum flow rate over time.

Constraints 2, 3 and 4 are of like kind, each specifying an upper bound on individual channel flows. Whereas the bound for constraint 2 is typically a constant, the bounds on 3 and 4 will vary over time. Nevertheless, only one of the three bounds is effective at any given time, namely the one with the smallest bound value, given by:

$$(7) \quad \mathrm{client.lookup(i).session.maxFlowRate} = \text{ minimum of}$$

1) client.lookup(i).channel.maxFlowRate,

2) (client.lookup(i).channel.bufferSize - client.lookup(i).channel.bufferLevel)* 8/60 + client.lookup(i).session.mediaContent.averagePlayRate,

3) client.lookup(i).session.payloadToGo * 8/60

Consequently, formulas 2, 3, and 4 can be consolidated into a single constraint, the bound for which is computed at every scan to be the smallest bound of associated constraints 2, 3 and 4.

$$(8) \quad \mathrm{client.lookup(i).channel.flowRate} <=$$
$$\mathrm{client.lookup(i).session.maxFlowRate},$$

whereby for all $i \ \varepsilon \ S_{activeClients}$, maxflowRate is given by equation (7).
At any one time, individual channel flows are constrained over a range, as follows:

$$(9) \quad \mathrm{client.lookup(i).session.flowRateRange} =$$
$$\mathrm{client.lookup(i).session.maxFlowRate} -$$
$$\mathrm{client.lookup(i).session.minimumFlowRate}$$

**4.3.1 Value Functions**

The value functions introduced in section 1.2 can now be expressed mathematically as linear functions of channel flows, as follows:

**4.3.1 Optimizing Throughput (Maximal Flow)**

$$(10) \quad \mathrm{value} = \sum_{i \ \varepsilon \ SactiveClients} (\mathrm{client.lookup(i).channel.flowRate})$$

**4.3.2 Optimizing Charges (Maximal Charges)**

$$(11) \quad \mathrm{value} = \sum_{i \ \varepsilon \ SactiveClients} (\mathrm{client.lookup(i).channel.flowRate} *$$
$$\mathrm{client.lookup(i).costOfService})$$

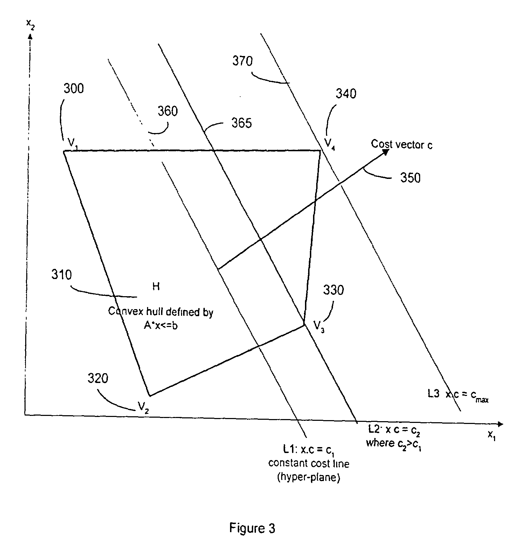

### 4.3.3 Optimization Problem Statement (Figure 3)

The optimization problem, which in one embodiment is strictly throughput and in another case is charge, can be stated simply as follows:

Find values for
client.lookup(i).channel.flowRate for all i ε $S_{activeClients}$ constrained by inequalities 1 through 5, such that the value obtained by evaluating expression 10 or 11 assumes a maximum.

Both of these problem formulations are examples of Linear Programming for which a number of well-known and generally effective computational solutions exist. In linear programming one seeks to optimize a linear cost function of variable x

$$(12) \qquad c^*x = c_1{}^*x_1 + \ldots + c_n{}^*x_n$$

subject to a set of linear inequality constraints

$$(13) \qquad A^*x <= b$$

where $x^T = (x_1, x_n)$, $c = (c_1,...,c_n)$ are the state variable & cost vectors, A is an n-by-m matrix, $b^T = (b_i,...b_m)$ is the constraint vector, and the operator '*' stands for matrix or scalar multiplication.

Figure 3 is introduced as illustrative of the problem statement and the general methods of the prior art, and is not incorporated as an element of the invention.

The linear programming problem as well as its solution can best be understood with the aid of geometry. Figure 3, depicting a 2-dimensional Cartesian problem space, inequality constraints (13) define a convex hull H 310 over which a search for an optimum value of $x = (x_1,x_2)$ is permitted to range. The cost vector c 350 defines an infinite family of equal cost lines (hyper-planes) which lie orthogonal to c. Three examples of such lines are shown in $L_1$ 360, $L_2$ 365, and $L_3$ 370, each of progressively higher value. The supreme value of the cost function is obtained by sliding along c 350 till one can go no further, in this instance toward vertex $V_4$ 340 of hull H 310. Many well-known methods (e.g. the Simplex Method) work roughly in this fashion, exploiting the fact that at least one optimum point must be at a vertex. In particular, the Simplex method algorithm begins by finding a vertex (e.g. $V_2$ 320), and then moves along a sequence of vertices (e.g. $V_3$ 330, $V_4$ 340) improving itself each time until no further improvement is possible & the summit is reached.

Let us suppose instead that $V_3$ 330 were placed along $L_3$ 370 along with $V_4$ 340. According to prior art methods, $V_3$ 330 and $V_4$ 340 are the two possible solutions, but the equally valuable points in between them are not. As we shall soon see, the problem of throughput optimization (6) falls in this category.

While vertex $V_1$ 300 does not factor into this description, it is depicted in figure 3 for completeness.

### 4.4 Flow Modulation

### 4.4.1 A Method for Maximal Flow

The following sections detail one embodiment to meet object 1 of section 1.3, namely to optimize the total data flow.

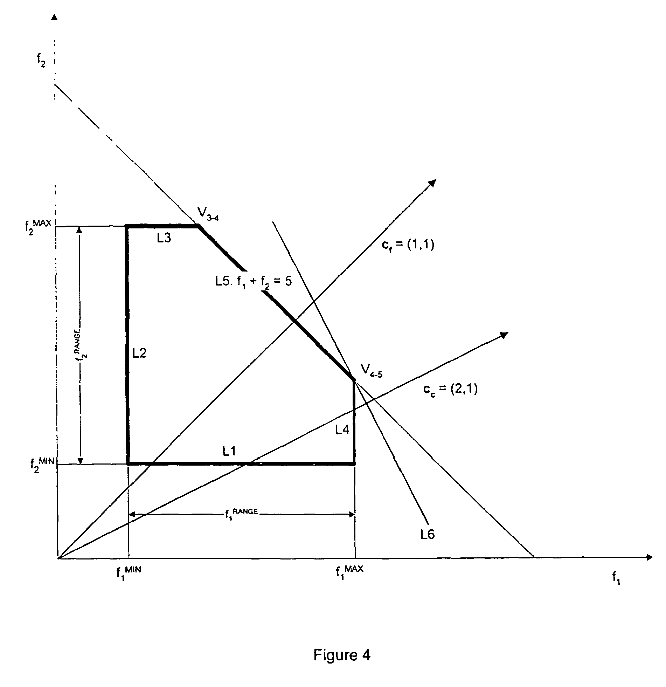

### 4.4.1.1 Overview (Figure 4)

Figure 4 depicts a scenario involving two flows. The convex hull is in this instance bounded by line segments L1, L2, L3, L4 and L5. L6 is a boundary used in a different embodiment, however the present embodiment uses L5 and not L6. Flow $f_2$ can range over the interval separating line segments L1 from L3, namely $f_2{}^{min}$ and $f_2{}^{max}$; the range is depicted as $f_2{}^{range}$. Flow $f_1$ can range over the interval between lines L2 and L4, namely $f_1{}^{min}$ and $f_1{}^{max}$, and depicted as $f_1{}^{range}$. The sum of flows $f_1$ and $f_2$ is constrained to lie inside of line segment L5 which, by construction, is always orthogonal to the cost vector $C_f$. Cost vector $C_c$ is also illustrated but used in a distinct embodiment. In the present embodiment, only $C_f$ is used. In the illustrated example of the present embodiment the constraint on total flow is set to 5, and is therefore low enough to cause L5 to intersect L3 and L4. This would not have been true had the value chosen had been 10 instead of 5. With L5 safely out of contention, the convex hull would-instead be a simple rectangle bounded by L1 through L4, thereby permitting both flows to assume their respective maxima without interference. In practice operational constraints exist intrinsically or are imposed from the outside so as to ensure cost effective sharing of potentially costly network resources.

Supposing figure 4 to be correct, the well-known methods would select would vertex $V_{3-5}$, which lies at the intersection of L3 and L5, or $V_{4-5}$, which lies at the intersection of L4 and L5. These solutions, though optimal, are undesirable for the present invention as they fail to spread available bandwidth over all channels as fairly as would a centrally located interior point of L5. For this reason a simple optimization method is taught, which is adapted to the particular needs of this problem and ensures a fairer allocation of constrained bandwidth among all channels.

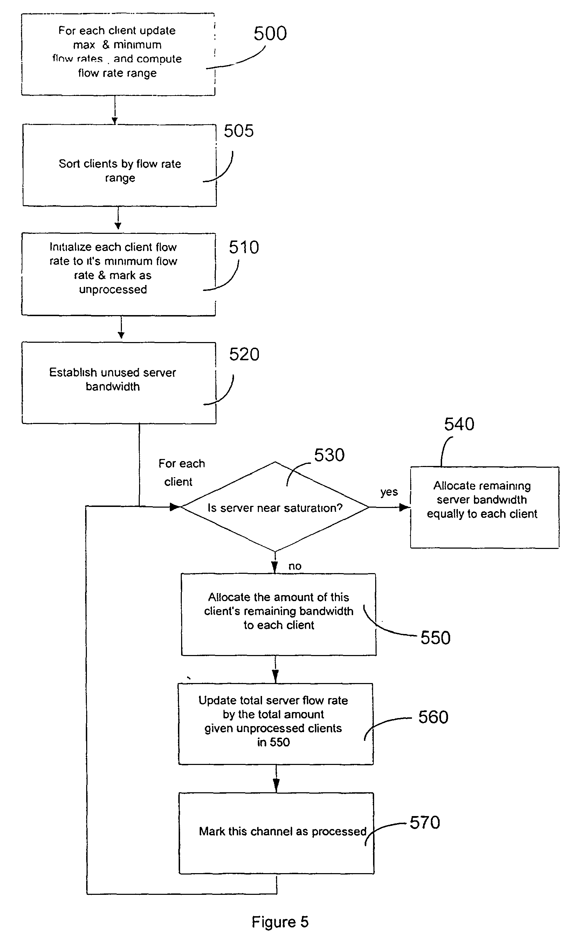

### 4.4.1.2 Procedure (Figure 5)

In order to optimize use of all available bandwidth, the following general method is used, with the details illustrated in figure 5 This method is a solution for the problem illustrated in Figure 4, which geometrically illustrates the optimization problem in the limited case of two flows, f1 and f2. The following description expands the problem to an arbitrary number of clients (and therefore flows) and presents a method for solving this optimization problem.

Referring to figure 5, in step 500 values are calculated for the *session maxFlowRate* and *session.minFlow-Rate* for each client as per the minimum and maximum constraint bound expressions in 6 and 8, respectively.

The difference between these two yields the *session.flowRateRange* of each client. Thus

$$session.flowRateRange = session\ maxFlowRate\text{-}\ session.minimumFlowRate$$

In step 505, the active clients are sorted in an ascending fashion based upon their *session.flowRateRange.* As will be shown this critical step facilitates allocation of the remaining server bandwidth as evenly as possible among all active channels, thus maximizing the number of channels that benefit by use of the total server bandwidth. An arbitrary assignation of remaining bandwidth is likely to saturate the server before all channels have been assigned extra bandwidth, thereby favoring certain channels on an ad-hoc basis.

In step 510, each client's channel flow rate is set to the *session mimimumFlowRate.*

By doing so it is ensured that the minimum flow constraint is met for each session and that the minimum flow rate is a non-increasing function of time, which is critical to the proper functioning of the CAC procedure. All clients are marked as unprocessed.

In the next step, 520, *server.flowRate* is set to the sum of each active client's *session.flowRate.*

Next, the following is iterated over all clients in sorted sequence (during any given iteration the selected client is given by its *id) by* performing steps 530 through 570. In step 530 evaluating the following expressions test for possible server saturation:

delta = (server.maxFlowRate - server.flowRate) / (qty of un-processed clients)
range = client.lookup(*id*).session.maxFlowRate - client.lookup(*id*).session.flowRate

If *range* is greater then *delta,* this implies that the server can be saturated in this iteration by allocating *delta* to all unprocessed clients (step 540).

On the other hand, the 'no' path for step 530 implies that the server is not saturated and that the present client (given by *id*) will saturate first. Accordingly, in 550 the *delta* variable is set as follows:

$$delta = range$$

Next, the flow rate is incremented for all unprocessed clients by *delta,* causing client *id* to saturate.

In step 560 the server flow rate is adjusted accordingly:

$$server.flowRate = server.flowRate\ + delta * (qty\ of\ unprocessed\ clients)$$

In step 570 the client given by id, now saturated, is marked as processed.

**4.4.2 A Method for Maximal Charge**

The following sections detail one embodiment to meet object 2 of section 1.2, namely to optimize the total monetary charges within the system.

**4.4.2.1 Overview (Figure 4)**

Referring back to Figure 4, cost vector $C_c$ lies orthogonal to line L6, which intersects the convex hull at the vertex formed by the intersection of lines L4 and L5, namely $V_{4-5}$. This cost vector, and the optimal point that it implies, favors flow f1 over flow f2. In this example, this is as it should be, as the cost of service for f1 equals 2, thus exceeding the cost of service of 1 set for f2. As the number of flows grows to exceed the number of distinct categories of service (and associated costs of service) the unique optimal solution, depicted in figure 4 for the case where every flow has a distinct cost of service, no longer applies. Once again a plurality of flows within a service category vie for bandwidth which a method should endeavor to distribute evenly.. This method is derived from the previous one, and optimizes one cost category after another, starting with the most costly and ending with the least costly, or when all available capacity is allocated.

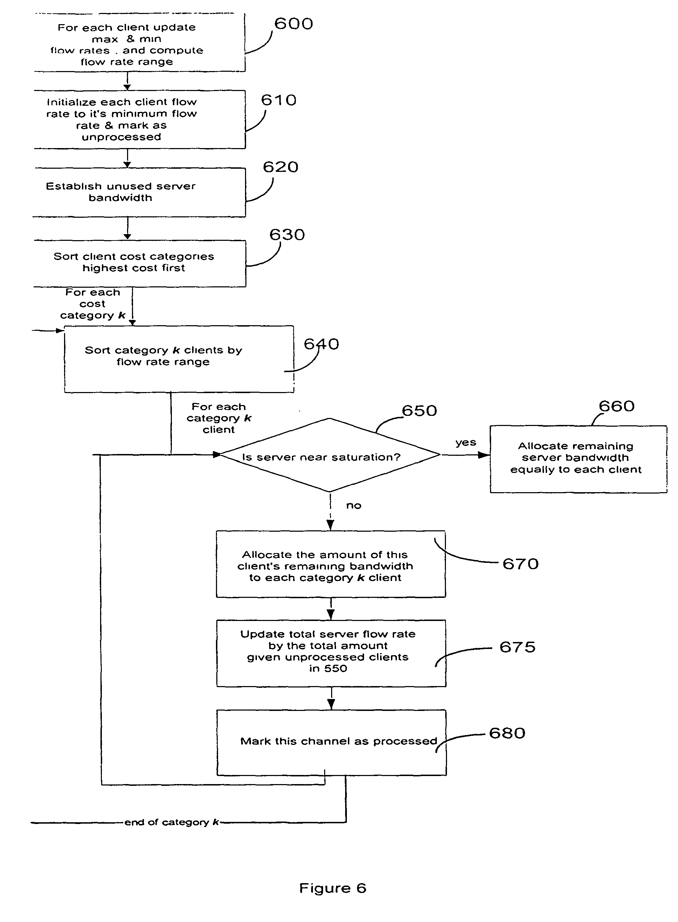

**4.4.2.2 Procedure (Figure 6)**

Let the service categories be denoted by k= 1..N, where k also denotes the cost of service.
Let $C_1..C_N$ be the partition of $S_{activeClients}$ that places all clients with cost of service k in set $C_k$. Partition sets $C_k$ can be ordered to form sequence SeqC = $C_N...C_1$.
Figure 6 depicts the method for implementing the method to maximize the cost of service (service charge) according to objective function 2 in section 1.3.
This method is nearly identical to the previous one. The principle difference stems from the partitioning of clients according to their category (cost) of service: clients charged most are allocated bandwidth preferentially. This is accomplished by adding another level of iteration around the method of figure 5. The inner iteration (steps 650 through 680) functions exactly as before, with the difference that its actions are limited to the clients belonging to the given service category k (i.e. $C_k$). This difference also holds true of step 640 which sorts category k clients according to their flow ranges prior to entry in the bandwidth-allocating inner loop. The outer loop proceeds down a sorted sequence of service categories SeqC (generated in step 630), starting with the category generating the greatest revenue to the service provider. Given a fairly static set of service categories, this sort need be performed only when the categories undergo change. Steps 670, 675 and 680 are identical to their counterparts in the method of figure 5 (i.e. 570, 575 and 580).
The net effect of this method is preferential allocation of bandwidth according to category of service, and equitable treatment of clients within the same category of service.

**4.5 Call Acceptance Control (CAC)**

**4.5.1 CAC for Maximal Flow**

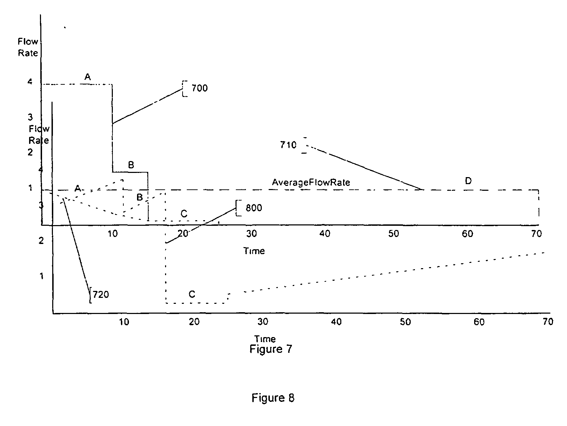

**4.5.1.1 Overview (Figures 7-8)**

The CAC procedure applicable to this flow optimization relies on the essential step of accepting a new client if and only if the added load induced thereby does not compromise service to existing clients or the new one. This critical step could not be accomplished without the close integration with previously- described flow-modulation methods of figures five and six.
According to the previous discussion, the minimum flow rate is the minimum sustained flow rate that guarantees that the associated viewer will not be subject to interruptions in service due to a shortfall of content from the media server. It follows that whenever data is being delivered at a rate in excess of the minimum flow rate, a downward adjustment toward the minimum level could be accommodated as needed to surrender bandwidth to any newcomer.
Figure 7 depicts content flow over a channel over the course of a typical session, and also how data is delivered under real-time streaming (D). The amount of content delivered is the same in either case, but the manner of delivery differs considerably. A session is launched at time 0 as the network is lightly loaded, and the optimizer sets an accordingly high flow rate. Another client emerges at the end of interval 700, causing a downward adjustment to the flow rate over interval B, as available bandwidth is shared between two sessions. During both of these intervals the minimum flow rate 720 drops quickly, as data accumulates in the client's media buffers. At the end of interval B a massive influx of clients necessitates that flow be dropped to the minimum flow rate, which now lies substantially below the streaming rate D and is held until all data is delivered at the end of interval C. Note that the minimum flow rate, graphed as element 720, diminishes monotonically over time.

The *server swing capacity* is defined as the difference between the maximum capacity of the server and the total minimum flow rates for all active clients. Therefore:

$$(14) \quad \text{swingCapacity} =$$

$$\text{server.maxFlowRate} - \sum_{i \, \in \, \text{SactiveClients}} (\text{client.lookup}(i).\text{session.minFlowRate})$$

Given the monotonic decreasing nature of session minimum flow rates, server swing capacity can readily be seen to be a *monotonic increasing* function of time over the intervals separating client admissions, at which points it undergoes a drop as a new load is taken on. This all-important characteristic implies the following:

*Any client admitted for service based on the present value of swing capacity is guaranteed to have sufficient bandwidth at its disposal over the entire future course of the session.*

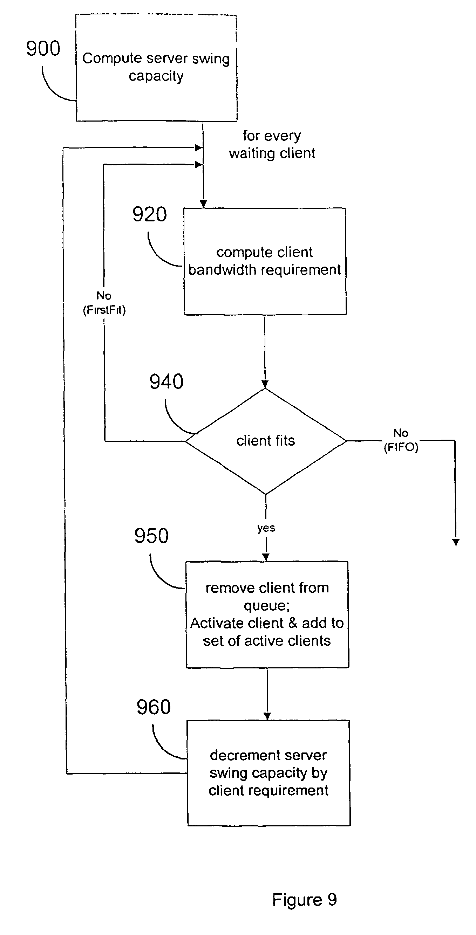

Figure 8 depicts the server swing capacity 800 over the course of the sessions illustrated in figure 7. Swing capacity rises quickly over intervals A & B as data is delivered at high flow rates over the network. It holds steady over interval C when all channels flow at their minimum rate then jumps at the end of C before resuming its monotonic rise once again.

### 4.5.1.2 Procedure (Figure 9)

In this procedure, which executes on a periodic basis, queued clients awaiting bandwidth are scanned in FIFO order. For each one the required bandwidth is computed as per the client's prior content selection. If the available swing capacity reduced by a safety margin exceeds the amount required then the client is activated, and swing capacity is adjusted accordingly. Otherwise two possible cases are considered: 1) under the *FirstFit* embodiment the procedure continues scanning clients to the end of the queue, activating clients whose requirements can be met; 2) under the *FIFO* embodiment, the procedure ends with the first candidate client whose requirements cannot be met.

In step 900 available server swing capacity is evaluated according to the formula

$$\text{swingCapacity} =$$

$$\text{server.maxFlowRate} - \sum_{i \, \in \, \text{SactiveClients}} (\text{client.get}(i).\text{session.minimumFlowRate})$$

The bandwidth requirement for client *id* in Step 920 is obtained as follows:

$$\text{required\_bandwidth} = \text{client.lookup}(\textit{id}).\text{contentSelection.averagePlayRate}$$

The predicate evaluated in Step 940 is given by the expression

$$(\text{required\_bandwidth} <= \text{swingCapacity} - \text{server.cac\_flowSafetyMargin})$$

In step 950, client activation entails allocation of a session and a channel, and insertion in the set of active clients' eligible for bandwidth allocation by the optimal flow modulator.

In step 960 the swing capacity is diminished by the amount reserved for the activated client:

$$\text{swingCapacity} = \text{swingCapacity} - \text{required\_bandwidth};$$

*4.5.2 Responding to Variations in Network Capacity (Maximal Flow)*

In the CAC procedure for maximal flow (section 3.5.1), a safety margin was introduced, namely *server.cac_flowSafetyMargin,* to provide the means for ensuring that the server's swing capacity will never fall below a minimal threshold value.

According to this procedure, the following inequality always holds true:

$$(15) \qquad swingCapacity >= server.cac\_flowSafetyMargin$$

In the previous discussion a server's swing capacity provided the basis for determining whether or not a prospective client should be allocated bandwidth. In another embodiment, server swing capacity can also be interpreted as specifying the *maximum* amount by which the *server.maxFlowRate* constraint can be dropped without affecting service, should such an adjustment prove necessary due, for instance, to an influx of exogenous network traffic that diminishes the amount available for multi-media services. Parameter server.cac_flowSafetyMargin can thus be set so as to guarantee a minimum capacity to tighten the constraint on maximum server flow in response to unexpected load changes that affect the server's ability to service its existing clients as well as new ones.

**4.5.3 Anticipating Scheduled Variations in Network Capacity (Maximal Flow)**

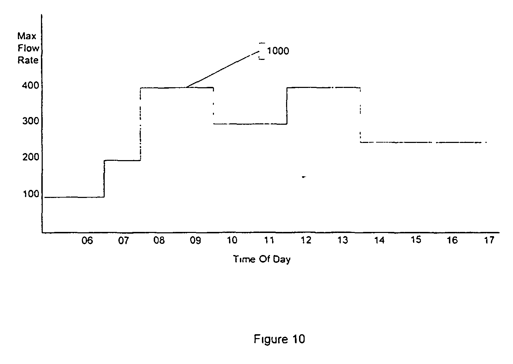

**4.5.3.1 Overview (Figure 10)**

Figure 10 depicts how the constraint on maximum flow might be allowed to vary according to the time of day, day of the week, and so forth, in expectation of time-varying traffic flow levels extrapolated from past experience, traffic flow models, etc. Maximum flow rate 1000 can be seen to vary based upon the time of day. In practice, defining the right-hand-side of inequality constraint 1 as a time-dependent expression can impose such time-varying capacities. According to the previous description, the optimizer, which executes on a periodic basis, will automatically seek new flow levels for every active session as the constraint varies. There is, however, no guarantee that an acceptable operating point will be found for all sessions (i.e. one that respects the minimal and maximum constraints on session channel flow). One such example is the case where the server is loaded to the limit and total capacity is curtailed in excess of the aforementioned safety margin. Should such a situation arise the only recourse may well be the termination of a number of established sessions (i.e. load shedding).

The goal is to eliminate service disruptions of this sort by allowing the CAC procedure to look ahead into the future, and accept new clients only if these can be accommodated without any compromise in service in the midst of *previously anticipated changes* in available network capacity. The following CAC procedure generalizes the previous one: before accepting a client the test on swing capacity is repeated over a sequence of time segments that cover the proposed viewing period.

**4.5.3.2 Definitions**

Let

$$(16) \qquad t\_end(i) = client.lookup(i).session.playTimeToGo + t\_now$$

Let server.maxFlowRate(t) be server flow capacity as a function of time, as exemplified in figure 10.

Let $Seq_T(t\_now)$ = advancing sequence of future times, lead by t_now, when server.maxFlowRate(t) undergoes a step change. For instance, at 9:15 in figure 10 this sequence reads as follows: 9:15, 9:30, 11:30, 13:30, 6:30, 7:30.

The server swing capacity at a future time t is computed according to the capacity and worst-case client flows at time t.

$$(17) \qquad swingCapacity(t) = server.maxFlowRate(t) -$$

$$\sum\nolimits_{t\_end(i) > t} (client.lookup(i).session.minFlowRate)$$

It is noteworthy that the worst-case client flows at time t are expressed in terms of the present minimum flow rates, which cannot increase over time, but might hold steady. Finally, a predicate is defined that tests whether a prospective customer will cause swing capacity to be exceeded at some time t, as follows:

$$(18) \quad boolean \; client\_fits(i,t) \; \{$$

$$if(client.lookup(i).contentSelection.averagePlayRate <=$$

$$swingCapacity(t) - server.cac\_flowSafetyMargin)$$

$$return \; true;$$

$$else \; return \; false;$$

$$\}$$

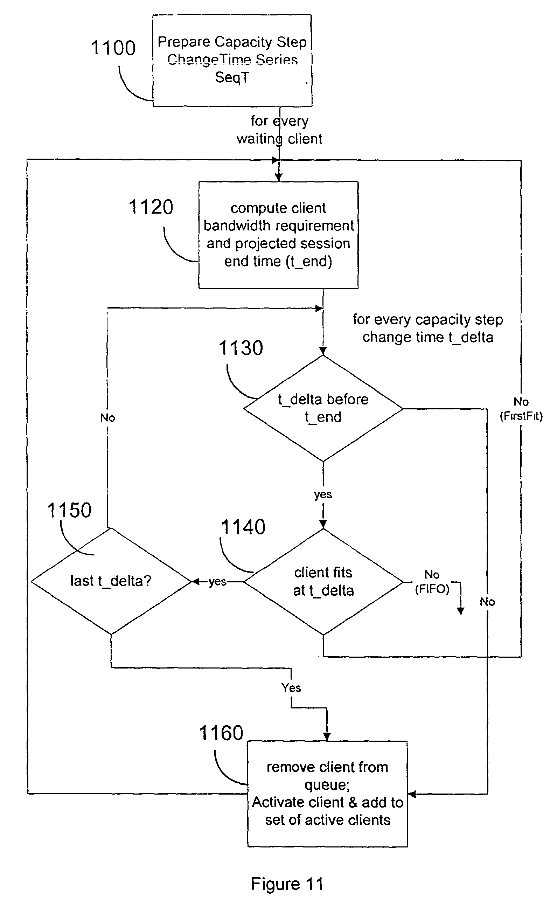

### 4.5.3.3 Procedure (Figure 11)

This procedure is an adaptation of the first, which has been extended to consider swing capacity at times in the future when capacity undergoes scheduled changes. Before accepting a client, its minimal bandwidth requirement (which by construction of the flow modulator will never increase over time) is checked against *projected swing capacity* at points in time when total available capacity undergoes scheduled step changes, provided these times fall within the proposed content viewing period. A candidate is activated only if all tests succeed.

Step 1100 builds a sequence of time values (SeqT) at which step capacity changes are scheduled to occur. The first element of this sequence is t_now, representing the present.

Beyond step 1100 the queue of waiting clients is scanned in FIFO order, yielding a candidate designated by *id* at each iteration.

The bandwidth requirement for client *id* in Step 1120 is obtained as follows:

$$required\_bandwidth = client.lookup(id).contentSelection.averagePlayRate$$

The worst-case end time for content flow to *id* is obtained according to the content selected, as follows:

$$t\_end = t\_now + client.lookup(id).selected.playTime$$

Steps 1130 through 1150 are executed within an iteration for each time point t in SeqT falling between t_now and t_end. This iteration is ended in step 1130 if t exceeds the time window of interest, or in step 1150 if the supply of scheduled capacity changes is exhausted.

For each time value step 1140 compares required bandwidth to projected swing capacity.

Projected swing capacity at time t is:

$$swingCapacity(t) = server.maxFlowRate(t) -$$

$$\sum\nolimits_{t\_end(i) \ge t} (\text{client.get(i).session.minimumFlowRate})$$

Note that only active clients whose t_end times occur after t are considered in the sum of minimum flow rates.

The predicate expression used in step 1140 at time t is thus

$$(\text{required\_bandwidth} <= \text{swingCapacity(t)} - \text{server.cac\_flowSafetyMargin})$$

Step 1160 performs the same actions as step 660 in the previous cac flowchart

The first CAC process presented in section 4.5.1 is a special case of the presePnt one, in which the set of step change times to server.maxFlowRate is empty (i.e. server.maxFlowRate is constant), and $\text{Seq}_T(\text{t\_now}) = \text{t\_now}$.

In preparing $\text{Seq}_T(\text{t\_now})$, one need only consider future times that will pass before the longest possible content is played out if started at t_now. In order to sidestep problems associated with rollover (at midnight, year 2000, etc.), time is best expressed as a monotonically increasing value (e.g. seconds since Jan 1 1990).

### 4.5.3 CAC for Maximal Charges

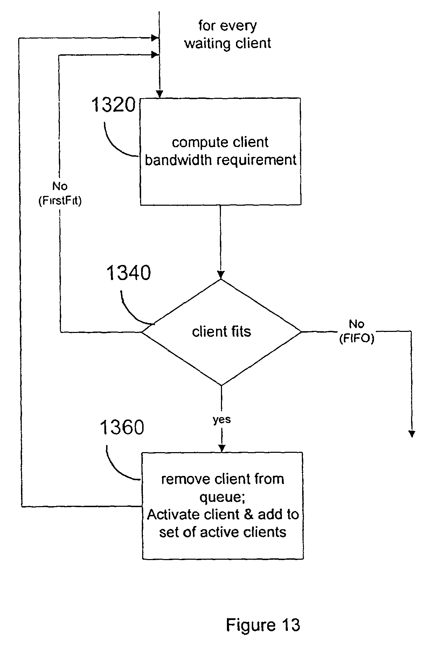

### 4.5.3.1 Overview (Figure 13)

In section 4.4.2 a method for flow modulation was presented that maximizes charges to clients with active sessions. The CAC embodiments presented previously is not sufficient as it does not consider the cost of service as a basis for connection acceptance. As a result it may turn away higher paying customers while granting service to lower paying ones, thereby defeating the purpose for this particular embodiment. Therefore, in another embodiment is defined which offers the following features:

1. Awaiting clients are serviced in order of their respective service categories, higher paying clients first.

2. Once accepted, a client is guaranteed to receive acceptable service irrespective of its service category.

3. Under heavy load conditions higher paying customers are more likely to be accepted than lower paying ones.

4. Lower paying customers will no be starved for service when higher paying ones enjoy a surplus.

5. Available bandwidth is not thrown away needlessly while clients are being denied service.

The first objective is easily met by dividing the client queue into as many bands as there are service categories, resulting in a banded queue. Bands are ordered within the queue according to their service categories, with the costliest category in front. As prospective clients arrive and make their selection they are placed in their respective queue band according to their service category (which may be set contractually, according to content selection, etc.).

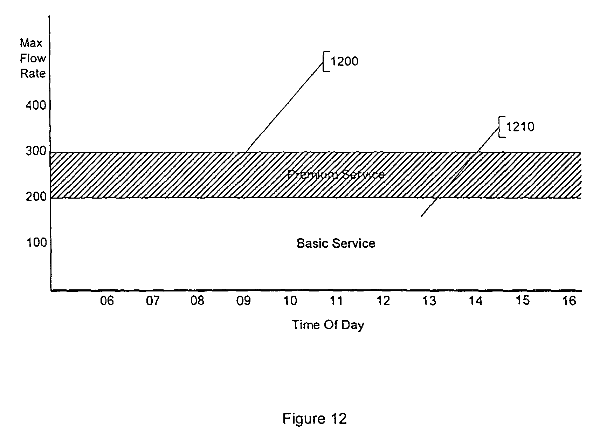

Our second objective is met by employing an procedure patterned after those presented previously & offering the same guarantee. Toward our third an fourth objectives we propose dividing total available bandwidth in as many strata as there are service categories, as depicted in Figure 12 Two service categories are shown, Premium and Basic, each entailing an associated cost of service. A prospective client is accepted only if there is sufficient swing capacity available within its service category. The swing capacity for a given category is given by the smaller of 1) the difference between its maximum floor flow rate - corresponding to the top of the stratum for the service category -- and the sum of the minimum rates of all active sessions in its category or below, and 2) available swing capacity overall. Finally, our fifth objective is met by allowing the flow optimizer to function freely subject to its operational constraints. The imposed ceilings on call acceptance by category relate to *minimum flow rates,* which merely impose a floor on *actual flow rates.* For example, basic clients might well consume all available bandwidth (300) in the absence of any premium customers, yet could be throttled back toward their floor flow rates (which together cannot exceed 200 in this example) at any time should any premium customer suddenly demand service. In contrast, premium customers could consume the entire 300 bandwidth. As lower paying customers appear these would be admitted to the degree that their quota on minimum flow is not exceeded (i.e. 200) and the availability of swing capacity on the system.

### 4.5.3.2 Procedure (Figure 13)

The present procedure requires a number of ancillary definitions, which follow:

Let the service categories be denoted by k= 1..N, where k also denotes the cost of service.

Let server.maxMinFlowRate[k-1] be the top of the stratum for service category k. Note that server.maxMin-FlowRate [N-1] = server.maxFlowRate.

Let $S_K$ be the set of active client indices with a service category equal to or less than k. Note that S 1 is contained in S2, S2 is contained in S3, and so forth, and that $S_N = S_{ActiveClients}$.

Let swingCapacity(k) denote available swing capacity for service category k. By construction,

$$(19) \quad \text{swingCapacity(k)} = \text{minimum of :}$$

$$(\text{server. maxMinFlowRate [k-1]} - \sum\nolimits_{i \in Sk} (\text{client.lookup(i).session.minFlowRate})),$$

$$(\text{server.maxFlowRate} - \sum\nolimits_{i \in SactiveClients} (\text{client.lookup(i).session.minFlowRate})))$$

Now, referring to figure13:

Now, referring to figure 13:

This method is used for CAC when multiple rate tariffs are in effect, and there is a desire to maximize economic returns to the service provider while offering acceptable service to all.

All waiting clients are scanned in FIFO sequence. The actions taken in Steps 1320 and 1360 are identical to those described in connection with earlier CAC flowcharts.

Step 1340 evaluates a predicate expression that tests whether the required bandwidth can be accommodated without exceeding the lesser of 1) swing capacity available to the client's category of service, and 2) total available swing across all categories of service. The latter factor could be determinative if all available bandwidth were allocated to high paying customers, leaving lower paying ones such as the proposed client unable to draw from their unfilled quota.

Let us suppose that candidate client *id* belongs to rate category *k*.

We define the swing capacity available in rate category *k* as:

$$\text{swingCapacity(k)} = \text{least of :}$$

$$(\text{server.maxMinFlowRate[k-1]} - \sum\nolimits_{i \in Sk}$$
$$(\text{client.lookup(i).session.minimumFlowRate}))$$

and

$$(\text{server.maxFlowRate} - \sum\nolimits_{i \in SactiveClients}$$
$$(\text{client.lookup(i).session.minimumFlowRate}))$$

The predicate expression invoked by step 1340 can now be written as follows:

$$(\text{required\_bandwidth} <= \text{swingCapacity}(k) - \text{server.cac\_flowSafetyMargin})$$

This algorithm processes queued clients in band sequence, and within every band in FIFO If the predicate evaluates to true the client is activated. Otherwise two possible cases are considered: 1) under the *FirstFit* embodiment the procedure continues scanning clients to the end of the banded queue, activating clients whose requirements can be met; 2) under the *FIFO* embodiment, the procedure ends with the first candidate client whose requirements cannot be met. Many other variations on these two embodiments might also be considered.

### 4.5.4 Anticipating Scheduled Variations in Network Capacity (Maximal Charge)

#### 4.5.4.1 Overview

The procedure applicable to optimization of delivery charges is obtained by blending elements of the CAC method depicted in Figure 13 into the method depicted in figure 11, which applies without change. To understand how this might work it may be useful to visualize a version of figure 10 stratified along its length in the manner of figure 8. As the maximum flow level undergoes a step change so too do the widths of its constituent strata in equal proportion.

#### 4.5.4.1 Procedure

As previously mentioned, the method of **CAC in section 4.5.3** (figure 11) applies to this circumstance also, provided we alter the definition of two routines, (17) and (18), upon which that procedure relies, yielding (20) and (21), and adopt the banded queue organization outlined in the previous section.

The server swing capacity at a future time t is computed according to the capacity and worst-case client flows at time t.

$$(20)\ \text{swingCapacity}(k,\ t) = \text{minimum of (}$$
$$(\text{server.maxFlowRate}(t)\ *(\text{server.maxMinFlowRate}[k-1]\ /$$
$$\text{server.maxMinFlowRate}[N-1]) - \sum_{i \in Sk\ \&\ (t\_end(i)\ >\ t)}$$
$$(\text{client.lookup}(i).\text{session.minFlowRate})\ ),$$
$$(\text{server.maxFlowRate} -$$
$$\sum_{i \in SactiveClients\ \&\ (t\_end(i)\ >\ t)}(\text{client.lookup}(i).\text{session.minFlowRate})))$$

Finally, we define a predicate that tests whether a prospective customer will cause swing capacity to be exceeded at some time t, as follows:

```
(21) boolean client_fits(i ,t) {
         k = client.lookup(i).costOfService;
         if(client.lookup(i).contentSelection.averagePlayRate <=
                          swingCapacity(k,t) - server.cac_flowSafetyMargin)
                 return true;
         else return false;
}
```

A method for call/connection acceptance and flow modulation for network delivery of video/audio programming is thus provided.

### Claims

1. A method for bandwidth allocation for delivery of multimedia data from server to one or more clients over a network, **characterised by** the steps of:

determining the maximum flow rate and minimum flow rate for each client (500);
determining the flow rate range for each client as given by the difference between said maximum flow rate and said minimum flow rate (500);
sorting the list of clients according to said flow rate range (505); initializing current flow rate for each client as said minimum flow rate (510) and summing said flow tate into total server flow rate;
establishing remaining server bandwidth (520); and
allocating said remaining server bandwidth to clients, based upon the sorted clients' flow rate ranges (530-570).

2. A method as in claim 1 further comprising the step of: sorting the list of clients according to categories of service which correspond to payment rates (630).

3. A method as in claim 1 or 2 wherein said step of allocating remaining server bandwidth to clients comprises iterating in sorted sequence for each unprocessed client the steps of:

determining equally-allocated remaining server bandwidth if allocated evenly to all unprocessed clients and;
determining the range of client bandwidth as given by the difference between said maximum flow rate and said minimum flow rate;
determining saturation by comparing said equally-allocated remaining server bandwidth and said range of client bandwidth (530), and allocating the lesser of these two amounts to each client flow rate (540, 550).

4. A method as in claim 1 further comprising the step of:

storing a sequence of data representing scheduled bandwidth changes for the server.

5. A method for connection acceptance control for delivery of multimedia data from server to one or more clients over a network, **characterised by** the steps of:

determining the server swing capacity given by the difference between the total server bandwidth and the sum of the minimum flow rate for each client (900);
allocating server bandwidth for each client which will fit without server bandwidth saturation, as determined by comparing the average data play rate of each client with the remaining bandwidth available to the server (940).

6. method as in claim 5 wherein said remaining bandwidth available to the server is given by said server swing capacity.

7. A method as in claim 6 wherein said remaining bandwidth available to the server is given by said server swing capacity less a server flow safety margin.

8. A method as in claim 5 wherein said step of allocating server bandwidth for each client which will fit without server bandwidth saturation is further comprised of:

allocating server bandwidth to each client sequentially until a client is located in which said average data play rate exceeds said server swing capacity.

9. A method as in claim 5 wherein said step of allocating server bandwidth for each client which will fit without server bandwidth saturation is further comprised of:

allocating server bandwidth to each client sequentially for each client which can be activated without server bandwidth saturation.

**Patentansprüche**

1. Verfahren zur Bandbreitenzuweisung für die Lieferung von Multimediadaten von einem Server zu einem oder mehreren Clients über ein Netzwerk, **gekennzeichnet durch** folgende Schritte:

Bestimmung der maximalen Flussrate und der minimalen Flussrate für jeden Client (500);
Bestimmung der Flussratenspannweite für jeden Client, die **durch** die Differenz zwischen der maximalen Flussrate und der minimalen Flussrate gegeben ist (500);

Sortieren der Liste an Clients gemäß der Flussratenspannweite (505);

Initialisieren der gegenwärtigen Flussrate für jeden Client als die minimale Flussrate (510) und Aufsummieren der Flussrate zur Gesamtflussrate des Servers;

Etablieren der verbleibenden Bandbreite des Servers (520); und

Zuweisung der verbleibenden Bandbreite des Servers an die Clients auf der Grundlage der Flussratenspannweiten der sortierten Clients (530-570).

**2.** Verfahren nach Anspruch 1, weiterhin mit dem folgenden Schritt:

Sortieren der Liste der Clients nach Dienstleistungskategorien, die Zahlungsraten entsprechen (630).

**3.** Verfahren nach Anspruch 1 oder 2, wobei der Schritt der Zuweisung verbleibender Bandbreite des Servers an die Clients das Wiederholen für jeden nicht behandelten Client in sortierter Reihenfolge der folgenden Schritte umfasst:

Bestimmung der gleichmäßig zugewiesenen verbleibenden Bandbreite des Servers, wenn sie allen nicht behandelten Clients gleichmäßig zugewiesen wird, und;

Bestimmung der Spannweite der Bandbreite des Clients, die durch die Differenz zwischen der maximalen Flussrate und der minimalen Flussrate gegeben ist;

Bestimmung der Sättigung durch Vergleich der gleichmäßig zugewiesenen verbleibenden Bandbreite des Servers mit der Spannweite der Bandbreite des Clients (530); und

Zuweisung der kleineren der beiden Größen an jede Client-Flussrate (540, 550).

**4.** Verfahren nach Anspruch 1, weiterhin mit folgendem Schritt:

Speichern einer Sequenz von Daten, die geplante Änderungen der Bandbreite des Servers darstellen.

**5.** Verfahren zur Steuerung der Verbindungsannahme für die Lieferung von Multimediadaten von einem Server zu einem oder mehreren Clients über ein Netzwerk, **gekennzeichnet durch** folgende Schritte:

Bestimmung der Reservekapazität des Servers, die **durch** die Differenz zwischen der Gesamtbandbreite des Servers und der Summe der minimalen Flussrate eines jeden Clients gegeben ist (900);

Zuweisung von Server-Bandbreite an jeden Client, die ohne Sättigung der Server-Bandbreite passen wird, wie sie **durch** Vergleich der durchschnittlichen Datenabspielrate eines jeden Clients mit der dem Server zur Verfügung stehenden verbleibenden Bandbreite bestimmt wird (940).

**6.** Verfahren nach Anspruch 5, wobei die dem Server zur Verfügung stehende verbleibende Bandbreite durch die Reservekapazität des Servers gegeben ist.

**7.** Verfahren nach Anspruch 6, wobei die dem Server zur Verfügung stehende verbleibende Bandbreite durch die Reservekapazität des Servers minus eine Serverfluss-Sicherheitsmarge gegeben ist.

**8.** Verfahren nach Anspruch 5, wobei der Schritt der Zuweisung von Server-Bandbreite an jeden Client, die ohne Sättigung der Server-Bandbreite passen wird, weiterhin Folgendes umfasst:

Sequentielle Zuweisung von Server-Bandbreite an jeden Client bis ein Client festgestellt wird, bei welchem die durchschnittliche Datenabspielrate die Reservekapazität des Servers übersteigt.

**9.** Verfahren nach Anspruch 5, wobei der Schritt der Zuweisung von Server-Bandbreite an jeden Client, die ohne Sättigung der Server-Bandbreite passen wird, weiterhin Folgendes umfasst:

Sequentielle Zuweisung von Server-Bandbreite an jeden Client, der ohne Sättigung der Server-Bandbreite aktiviert werden kann.

**Revendications**

**1.** Un procédé pour l'allocation de bande passante pour la livraison de données multimédia d'un serveur à un ou plusieurs clients à travers un réseau, **caractérisé par** les étapes suivantes :

déterminer le débit maximal et le débit minimal pour chaque client (500) ;

déterminer l'écart de débit pour chaque client qui est donné par la différence entre le débit maximal et le débit minimal (500) ;

trier la liste des clients en fonction de l'écart de débit (505) ;

initialiser le débit actuel pour chaque client au débit minimal (510) et additionner le débit en un débit total du serveur ;

établir la bande passante restante du serveur (520) ; et

allouer la bande passante restante du serveur aux clients, sur la base des écarts de débit des clients triés (530-570).

2.  Procédé selon la revendication 1, comprenant en outre l'étape suivante :

trier la liste des clients selon des catégories de service qui correspondent à des taux de paiement (630).

3.  Procédé selon la revendication 1 ou 2, l'étape d'allocation de bande passante restante du serveur aux clients comprenant l'itération, en séquence triée, pour chaque client non traité des étapes suivantes :

déterminer la bande passante restante du serveur allouée de façon égale si elle est allouée uniformément à tous les clients non traités et ;

déterminer l'écart de bande passante du client qui est donné par la différence entre le débit maximal et le débit minimal ;

déterminer la saturation en comparant la bande passante restante du serveur allouée de façon égale à l'écart de bande passante du client (530); et

allouer la plus petite de ces deux grandeurs à chaque débit de client (540, 550).

4.  Procédé selon la revendication 1, comprenant en outre l'étape suivante :

mémoriser une séquence de données qui représentent des changements de bande passante du serveur planifiés.

5.  Un procédé de contrôle d'acceptation de connexion pour la livraison de données multimédia d'un serveur à un ou plusieurs clients à travers un réseau, **caractérisé par** les étapes suivantes :

déterminer la capacité en réserve du serveur qui est donnée par la différence entre la bande passante totale du serveur et la somme du débit minimal pour chaque client (900) ;

allouer de la bande passante du serveur à chaque client qui conviendra sans saturation de la bande passante du serveur, telle que déterminée en comparant le taux moyen de reproduction de données de chaque client à la bande passante restante à disposition du serveur (940).

6.  Procédé selon la revendication 5, la bande passante restante à disposition du serveur étant donnée par la capacité en réserve du serveur.

7.  Procédé selon la revendication 6, la bande passante restante à disposition du serveur étant donnée par la capacité en réserve du serveur moins une marge de flux de sécurité du serveur.

8.  Procédé selon la revendication 5, l'étape d'allocation de bande passante du serveur à chaque client qui conviendra sans saturation de la bande passante du serveur comprenant en outre :

l'allocation de bande passante du serveur à chaque client de façon séquentielle jusqu'à la localisation d'un client pour lequel le taux moyen de reproduction de données excède la capacité en réserve du serveur.

9.  Procédé selon la revendication 5, l'étape d'allocation de bande passante du serveur à chaque client qui conviendra sans saturation de la bande passante du serveur comprenant en outre :

l'allocation de bande passante du serveur à chaque client de façon séquentielle pour chaque client qui peut être activé sans saturation de la bande passante du serveur.

start → Client connection ,100

Client authentication; viewing selection  110

not authenticated  120

Data rate set  130

Placed in CAC queue  140

CAC time-out  150

Allocate channel  160

Content flow  170

network overload abort  180

end  190

Figure 1

Figure 2

Figure 3

Figure 4

For each client update
max & minimum
flow rates , and compute
flow rate range

500

Sort clients by flow rate
range

505

Initialize each client flow
rate to it's minimum flow
rate & mark as
unprocessed

510

Establish unused server
bandwidth

520

For each
client

Is server near saturation?

530

yes

Allocate remaining
server bandwidth
equally to each client

540

no

Allocate the amount of this
client's remaining bandwidth
to each client

550

Update total server flow rate
by the total amount
given unprocessed clients
in 550

560

Mark this channel as processed

570

Figure 5

27

For each client update
max & min
flow rates . and compute
flow rate range — 600

Initialize each client flow
rate to it's minimum flow
rate & mark as
unprocessed — 610

Establish unused server
bandwidth — 620

Sort client cost categories
highest cost first — 630

For each
cost
category *k*

Sort category *k* clients by
flow rate range — 640

For each
category *k*
client

Is server near saturation? — 650    yes → Allocate remaining
server bandwidth
equally to each client — 660

no

Allocate the amount of this
client's remaining bandwidth
to each category *k* client — 670

Update total server flow rate
by the total amount
given unprocessed clients
in 550 — 675

Mark this channel as processed — 680

end of category *k*

Figure 6

Figure 7

Figure 8

900 — Compute server swing capacity

for every waiting client

920 — compute client bandwidth requirement

940 — client fits

No (FirstFit)

No (FIFO)

yes

950 — remove client from queue;
Activate client & add to set of active clients

960 — decrement server swing capacity by client requirement

Figure 9

30

Figure 10

Figure 11

Figure 12

for every
waiting client

1320

compute client
bandwidth requirement

No
(FirstFit)

1340

client fits

No
(FIFO)

yes

1360

remove client from
queue;
Activate client & add to
set of active clients

Figure 13